# EUROPEAN PATENT APPLICATION

(11) **EP 4 318 152 A1**
(43) Date of publication of application: **07.02.2024**
(21) Application number: 22774807.6
(22) Date of filing: 18.02.2022
(51) Int. Cl.: G05B 19/418, G06Q 50/04, G06Q 10/06

(54) **PRODUCTION PLAN MANAGEMENT DEVICE, PRODUCTION PLAN MANAGEMENT METHOD, AND PRODUCTION PLAN MANAGEMENT SYSTEM**

(30) Priority: 23.03.2021 JP 2021049077
(71) Applicant: Hitachi, Ltd., Tokyo 100-8280 (JP)
(72) Inventor: BEMBDE, Swapnil, Tokyo 100-8280 (JP); YOSHIUCHI, Hideya, Tokyo 100-8280 (JP)
(74) Representative: Mewburn Ellis LLP
(86) International application number: PCT/JP2022/006529
(87) International publication number: WO 2022/202007

(57) **Abstract**

In order to create, in real time, a production plan capable of responding to a sudden plan change in consideration of costs arising due to the production plan and a failure probability of a manufacturing process, a production plan management device includes: a communication unit configured to acquire product order information including a customer request for a first product and cost criterion information specifying a cost criterion for a budget of costs required to manufacture the first product; a storage unit configured to store at least a structural constraint database including structural constraint information specifying a structural constraint defining a condition for manufacturing processes to manufacture the first product in a factory; and a production plan generating unit configured to generate, in real time, a production plan that satisfies the customer request, the cost criterion, and the structural constraint and defines manufacturing processes for manufacturing the first product.

## Description

### Technical Field

This disclosure relates to a production plan management device, a production plan management method, and a production plan management system.

### Background Art

Generally, a manufacturing process of a product is constituted by steps such as machining, assembling, and testing. Each of these steps is constituted by one or more manufacturing lines. Further, a manufacturing line is constituted by a plurality of processes, and the operation of each of the processes is performed by a production facility or manpower.

In a factory, products are manufactured based on order information indicating requests from customers. The order information is constituted by an item, quantity, a desired delivery date, and so on of a requested product. It is important to generate an optimum production plan to perform a necessary manufacturing process efficiently so as not to be late for a desired delivery date specified by the order information.

One technique for managing the delay of a production plan is disclosed in Japanese Patent Application Laid-Open No. 2007-133612 (Patent Document 1).

Patent Document 1 discloses a technology that "in a product production process, a plurality of takeoff objectives having different priorities is set by a multiple-takeoff-objective setting unit 12 based on a takeoff request of manufacturing a preset quantity of a product corresponding to a preset item and taking off the product by a predetermined deadline at a target step, and basic information of a production plan, production plan data satisfying the plurality of takeoff objectives is obtained by a production plan calculating unit 13, takeoff objective delay data indicating that the production plan data is delayed from the plurality of takeoff objectives is obtained by a takeoff objective delay calculating unit 14, and based on the production plan data and the takeoff objective delay data, a degree of delay of the product is displayed by an item-specific lot list takeoff amount table creating unit 15 in accordance with each of the plurality of takeoff objectives in a preset display conformation, e.g., a display color or a font."

### Citation List

### Patent Documents

Patent Document 1: Japanese Patent Application Laid-Open No. 2007-133612

### Summary of the Invention

### Problem to be Solved by the Invention

In Patent Document 1, by making the degree of delay of a production plan for product manufacture clearly identifiable, the production plan can be adjusted to minimize this delay.

However, the production plan technique described in Patent Document 1 focuses on the management of delay and does not consider the costs such as labor costs or inventory carrying costs that arise due to a specific production plan, or the failure probability of the manufacturing processes, and therefore, even if delay is mitigated, the production plan may result in high costs or failure probability.

Further, conventional production plan techniques make production plans for a few days to several weeks, and therefore, in a case where a sudden plan change is demanded by a failure in a factory, a customer request, delay in procurement of raw materials or components, or the like, for example, it is difficult to quickly generate a production plan that responds to this.

In view of this, an object of this disclosure is to provide production a plan management technique for generating, in real time, a production plan capable of responding to a sudden plan change in consideration of the costs in the production plan or the probability of possible failure in a manufacturing process.

### Means for solving the Problems

In order to achieve the object, one of representative production plan management devices of this disclosure is a production plan management device for generating, in real time, a production plan of a product and includes: a communication unit configured to acquire product order information including a customer request specifying an item, quantity, and a delivery date of a first product and cost criterion information specifying a cost criterion for costs required to manufacture the first product; a storage unit configured to store a structural constraint database including structural constraint information specifying a structural constraint defining a condition for manufacturing processes to manufacture the first product in a factory; and a production plan generating unit configured to generate, in real time, a production plan that satisfies the customer request, the cost criterion, and the structural constraint and defines manufacturing processes for manufacturing the first product.

### Advantageous Effect of the Invention

According to the present disclosure, it is possible to provide a production plan management technique for generating, in real time, a production plan capable of responding to a sudden plan change in consideration of the costs in the production plan or the probability of a possible failure in a manufacturing process.

Objects, configurations, and effects other than those described above will be made clear by the following description of embodiments.

### Brief Description of the Drawings

FIG. 1 is a block diagram of a computer system for implementing the embodiments of the present disclosure;
FIG. 2 is a view illustrating an example of a production plan management system according to the embodiments of the present disclosure;
FIG. 3 is a view illustrating an example of a hardware configuration of a production plan management device in a production plan management system according to the embodiments of the present disclosure;
FIG. 4 is a view illustrating an example of various databases stored in a storage unit according to the embodiments of the present disclosure;
FIG. 5 is a view illustrating an example of the flow of a manufacturing process in a production plan according to the embodiments of the present disclosure;
FIG. 6 is a view illustrating an example of the communication flow of various pieces of information in the production plan management system according to the embodiments of the present disclosure;
FIG. 7 describes a configuration of the manufacturing process in the production plan according to the embodiments of the present disclosure;
FIG. 8 is a view illustrating an example of the flow of an estimated delivery date determination process according to the embodiments of the present disclosure;
FIG. 9 is a view illustrating an example of a long-term production plan generating process according to the embodiments of the present disclosure;
FIG. 10 is a view illustrating an example of the flow of a short-term production plan generating process according to the embodiments of the present disclosure;
FIG. 11 is a view illustrating an example of the flow of a production plan change process according to the embodiments of the present disclosure;
FIG. 12 is a view illustrating another example of the flow of the production plan change process according to the embodiments of the present disclosure;
FIG. 13 is a view illustrating an example of a cost criterion information setting interface to set cost criterion information according to the embodiments of the present disclosure; and
FIG. 14 is a view illustrating another example of the cost criterion information setting interface to set cost criterion information according to the embodiments of the present disclosure.

### [Description of Embodiment(s)]

With reference to drawings, the following describes embodiments of the present invention. Note that the present invention is not limited by the embodiments. Further, in the description of the drawings, the same element has the same reference sign.

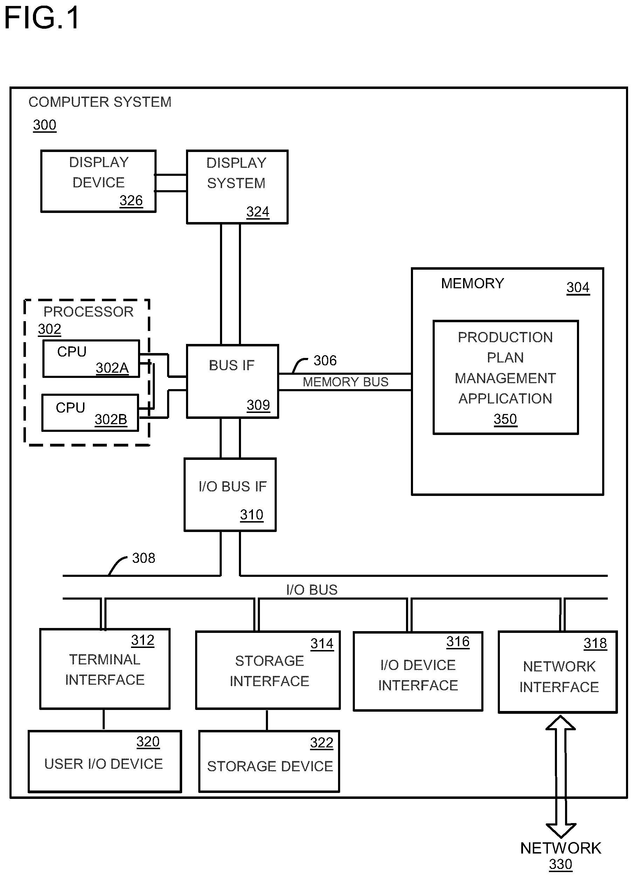

First described is a computer system 300 for implementing the embodiment of the present invention with reference to FIG. 1. Mechanisms and devices of various embodiments disclosed in the present specification may be applied to a given appropriate computing system. The main components of the computer system 300 include one or more processors 302, a memory 304, a terminal interface unit 312, a storage interface 314, an I/O (input-output) device interface 316, and a network interface 318. These components may be connected to each other via a memory bus 306, an I/O bus 308, a bus interface unit 309, and an I/O bus interface unit 310.

The computer system 300 may include one or more general-purpose programmable central processing units (CPU) 302A and 302B generally referred to as a processor 302. In one embodiment, the computer system 300 may include a plurality of processors, and in another embodiment, the computer system 300 may be a single CPU system. Each processor 302 executes a command stored in the memory 304 and may include an on-board cache.

In one embodiment, the memory 304 may include a random-access semiconductor memory, a storage device, or a storage medium (either volatile or nonvolatile) for storing data and programs. The memory 304 may store all or some of a program, a module, and a data structure for implementing functions described in the present specification. For example, the memory 304 may store a production plan management application 350. In one embodiment, the production plan management application 350 may include a command or a description to execute a function (described later) on the processor 302.

In one embodiment, instead of a processor-based system or in addition to a processor-based system, the production plan management application 350 may be performed by hardware via a semiconductor device, a chip, a logical gate, a circuit, a circuit card and/or other physical hardware devices. In one embodiment, the production plan management application 350 may include data other than the command or the description. In one embodiment, a camera, a sensor, or other data input devices (not illustrated) may be provided to directly communicate with other hardware of the bus interface unit 309, the processor 302, or the computer system 300.

The computer system 300 may include the bus interface unit 309 configured to perform communication between the processor 302, the memory 304, a display system 324, and the I/O bus interface unit 310. The I/O bus interface unit 310 may be connected to the I/O bus 308 for transferring data to various I/O units. The I/O bus interface unit 310 may communicate with a plurality of I/O interface units 312, 314, 316, and 318 also known as an I/O processor (IOP) or an I/O adapter (IOA) via the I/O bus 308.

The display system 324 may include a display controller, a display memory, or both of them. The display controller can provide data of video, audio, or both of them to a display device 326. Further, the computer system 300 may include a device such as one or more sensors configured to collect data and provide the data to the processor 302.

For example, the computer system 300 may include a biometric sensor configured to collect heart rate data, stress level data, and the like, an environmental sensor configured to collect humidity data, temperature data, pressure data, and the like, a motion sensor configured to collect acceleration data, motion data, and the likes, and so on. Sensors of types other than those are also usable. The display system 324 may be connected to the display device 326 such as an independent display screen, a television, a tablet, or a portable device.

The I/O interface unit has a function to communicate with various storages or I/O devices. For example, the terminal interface unit 312 is attachable to a user I/O device 320, e.g., a user output device such as a video display device or a speaker television, or a user input device such as a keyboard, a keypad, a touchpad, a track ball, a button, a light pen, or other pointing devices. A user may operate a user input device by use of a user interface to enter input data or an instruction into the user I/O device 320 and the computer system 300 and to receive output data from the computer system 300. The user interface may be displayed on a display device, played through a speaker, or printed through a printer via the user I/O device 320, for example.

The storage interface 314 is attachable to one or more disk drives or a direct access storage device 322 (generally, a magnetic disk drive storage device but may be an array of disk drives configured to appear as a single disc drive or other storage devices). In one embodiment, the storage device 322 may be mounted as a given secondary storage. The contents of the memory 304 may be stored in the storage device 322 and read out from the storage device 322 as needed. The I/O device interface 316 may provide an interface for other I/O devices such as a printer or a facsimile machine. The network interface 318 may provide a communications path so that the computer system 300 and other devices can communicate with each other. The communications path may be a network 330, for example.

In one embodiment, the computer system 300 may be a device configured to receive a request from other computer systems (clients) including no direct user interface, e.g., a multi-user main frame computer system, a single user system, a server computer, and the like. In another embodiment, the computer system 300 may be a desktop computer, a portable computer, a notebook computer, a tablet computer, a pocket computer, a telephone, a smartphone, or given other appropriate electronic apparatuses.

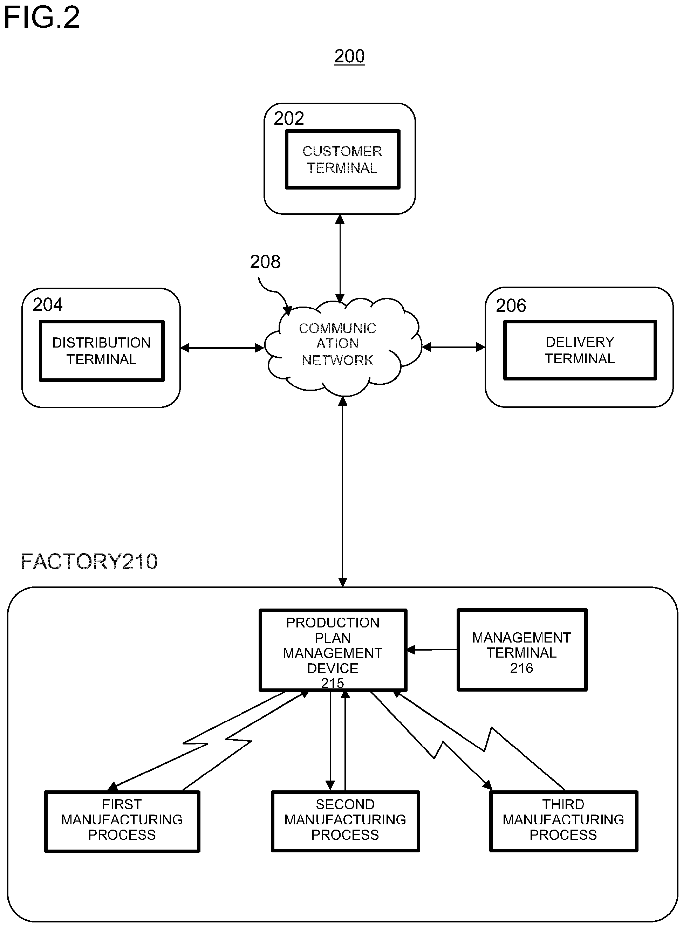

Next, with reference to FIG. 2, a production plan management system according to the embodiments of the present disclosure will be described.

FIG. 2 is a view illustrating an example of a production plan management system 200 according to the embodiment of this disclosure. As illustrated in FIG. 2, the production plan management system 200 includes a customer terminal 202, a distribution terminal 204, a delivery terminal 206, a communication network 208, a factory 210, a production plan management device 215, and a management terminal 216.

As illustrated in FIG. 2, the customer terminal 202, the distribution terminal 204, the delivery terminal 206 are connected to the production plan management device 215 and the management terminal 216 of the factory 210 via the communication network 208. The communication network 208 here may include the Internet, a LAN (Local Area Network), a MAN (Metropolitan Area Network), a WAN (Wide Area Network), and the like, for example.

The customer terminal 202 is a terminal used by a customer requesting a specific product from the factory 210. The customer here refers to a client purchasing a product manufactured in the factory 210 and may include, for example, a retail store, a company, an association, an organization, an individual, or the like. Further, the customer terminal 202 may be a given computing device such as a desktop computer, a notebook computer, a tablet, or a smartphone, for example.

The customer terminal 202 transmits product order information specifying an item, quantity, and a desired delivery date of a requested product to the factory 210 via the communication network 208. The product order information may be created by the customer using the customer terminal 202, for example.

The distribution terminal 204 is a terminal used by an administrator of a distribution center serving as a physical distribution base of the product manufactured in the factory 210. The distribution center here is a place where products manufactured in the factory 210 are stored as stock, and in response to an instruction from the factory 210, the products are sorted by destination and arranged to be delivered, and the distribution terminal 204 may manage information on the stock of the products, sorting, destinations, and so on.

The distribution terminal 204 may be a given computing device such as a desktop computer, a notebook computer, a tablet, or a smartphone, for example.

As will be described later, the distribution terminal 204 transmits distribution and delivery status information to the factory 210 in cooperation with the delivery terminal 206.

The delivery terminal 206 is a terminal used by an administrator of a delivery center in which the products sorted by destination and stored as stock in the aforementioned distribution center are delivered to customers. The delivery terminal 206 may manage information on a product, information on the customer to whom the product is to be delivered, information on delivery availability, and the like, for example.

The delivery terminal 206 may be a given computing device such as a desktop computer, a notebook computer, a tablet, or a smartphone, for example.

As will be described later, the delivery terminal 206 transmits distribution and delivery status information indicating respective statuses of distribution and delivery to the factory 210 in cooperation with the distribution terminal 204.

The factory 210 is a facility in which products are produced and manufactured, inspected, fixed, and maintained. In the factory 210, products are manufactured based on product order information received from the customer terminal 202. The production and manufacture in the factory 210 is performed in accordance with a production plan.

As an example, the factory 210 may be a factory to manufacture automobiles.

As illustrated in FIG. 2, the factory 210 includes the production plan management device 215 and the management terminal 216.

The production plan management device 215 is a device for creating a production plan to manufacture a product to be manufactured in the factory 210. The production plan here is information that specifies a type, quantity, a schedule, a manufacturing process, a raw material, and so on of a product to be produced. In other words, the production plan is information for determining what is produced, how much quantity is to be produced, and when and how the product is to be produced. As will be described later, the production plan may be created based on product order information received from the customer terminal 202, cost criterion information specifying the criterion for costs, distribution and delivery status information received from the distribution terminal 204 and the delivery terminal 206, and so on.

The production plan is information for specifying the flow of manufacturing processes for manufacturing a product, for example. The manufacturing processes here indicate the procedures for creating a specific product. The manufacturing processes may be performed in one or more manufacturing lines. The manufacturing lines here are facilities created to perform assembly line production for manufacturing the same or similar products in large quantity.

As illustrated in FIG. 2, the production plan management device 215 may create a production plan including a first manufacturing process, a second manufacturing process, and a third manufacturing process. The contents or the number of the manufacturing processes here may vary depending on the product to be manufactured, but the manufacturing processes may include, as an example, introduction of materials, machining, inspection, welding, coating, assembling, packaging, and so on.

Note that details of the production plan management device 215 will be described later, and therefore, the production plan management device 215 is not described herein.

The management terminal 216 is a terminal used by the administrator of the factory 210. The administrator of the factory 210 may use the management terminal 216 to input information (cost criterion information, information on structural constraints, or the like) to be used when the production plan management device 215 creates a production plan. The management terminal 216 may be a given computing device such as a desktop computer, a notebook computer, a tablet, or a smartphone, for example.

Note that FIG. 2 illustrates, as an example, a production plan management system 200 including one customer terminal 202, one distribution terminal 204, one delivery terminal 206, and one management terminal 216, but this disclosure is not limited to this, and the production plan management system 200 may include a plurality of customer terminals 202, a plurality of distribution terminals 204, a plurality of delivery terminals 206, and a plurality of management terminals 216.

With the production plan management system 200 configured as described above, it is possible to provide production plan management means for generating, in real time, a production plan capable of responding to a sudden plan change in consideration of costs arising due to the production plan or the failure probability in a manufacturing process.

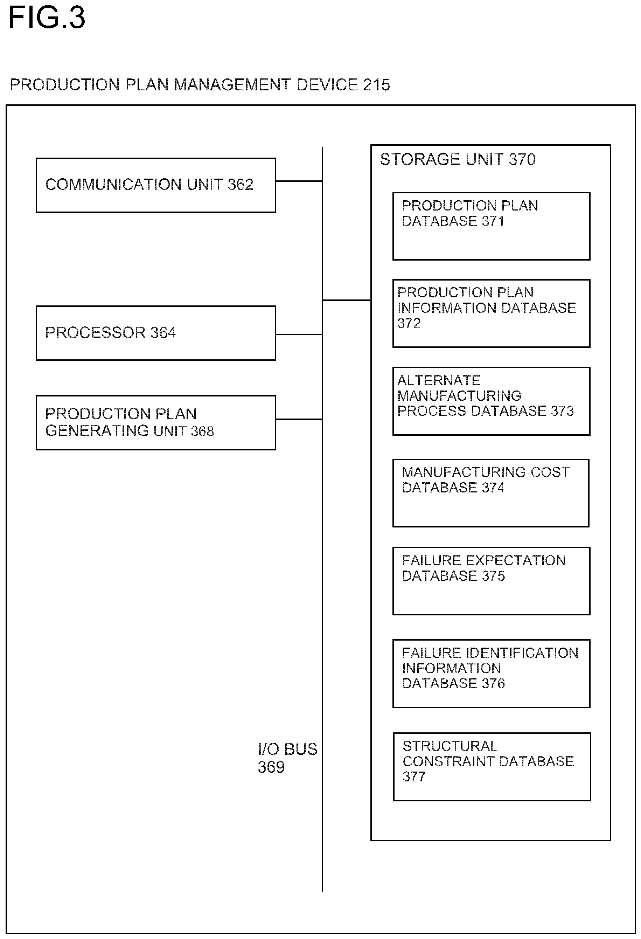

Next, with reference to FIG. 3, a hardware configuration of the production plan management device in the production plan management system according to the embodiments of the present disclosure will be described.

FIG. 3 is a view illustrating an example of a hardware configuration of the production plan management device 215 in the production plan management system 200 according to the embodiments of the present disclosure.

As illustrated in FIG. 3, the production plan management device 215 includes a communication unit 362, a processor 364, a production plan generating unit 368, an I/O bus 369, and a storage unit 370.

Further, as illustrated in FIG. 3, the communication unit 362, the processor 364, the production plan generating unit 368, and the storage unit 370 are connected to each other via the I/O bus 369.

Note that the functions of respective functional units of the production plan management device 215 illustrated in FIG. 3 may be implemented by the computer system 300 described with reference to FIG. 1, for example. For example, respective functional units of the production plan management device 215 illustrated in FIG. 3 may be configured as software modules included in the production plan management application 350 in the computer system 300 illustrated in FIG. 1.

The communication unit 362 is a functional unit configured to transmit and receive various pieces of information via the communication network. The communication unit 362 may receive, for example, information from the aforementioned customer terminal (the customer terminal 202 illustrated in FIG. 2), distribution terminal (the distribution terminal 204 illustrated in FIG. 2), delivery terminal (the delivery terminal 206 illustrated in FIG. 2), and management terminal (the management terminal 216 illustrated in FIG. 2). As an example, the communication unit 362 may receive product order information to specify the item, the quantity, and the desired delivery date of a first product from the customer terminal, receive distribution and delivery status information indicating respective states of distribution and delivery from the distribution terminal and the delivery terminal, and receive information on the cost criterion to specify a cost target for manufacturing the first product from the management terminal 216.

The processor 364 is a computing device configured to execute a command to implement the functions of respective functional units of the production plan management device 215 and is substantially similar to the processor 302 illustrated in FIG. 1, for example, and therefore, the processor 364 is not described herein.

The production plan generating unit 368 is a functional unit for creating a production plan to manufacture a product to be manufactured in a factory (e.g., the factory 210 illustrated in FIG. 2). For example, the production plan generating unit 368 may generate, in real time, a production plan to manufacture a product, the production plant satisfying the cost criterion and the structural constraints of the factory, based on the product order information received from the customer terminal. In one embodiment, the production plan generating unit 368 may use information on various databases stored in the storage unit 370 to generate the production plan.

The storage unit 370 is a storage unit in which various pieces of data used by the functional units of the production plan management device 215 are stored. The storage unit 370 here may be a local storage such as a hard disk drive or a solid-state drive or may be a distributed storage service such as a cloud, for example.

As illustrated in FIG. 3, the storage unit 370 may store a production plan database 371, a production plan information database 372, an alternate manufacturing process database 373, a manufacturing cost database 374, a failure expectation database 375, a failure identification information database 376, and a structural constraint database 377.

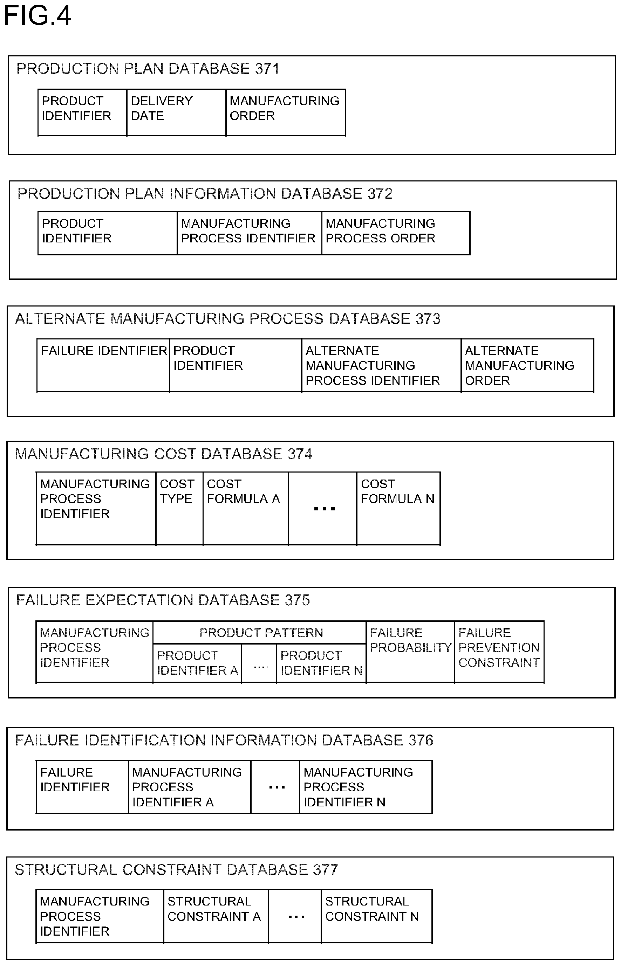

Note that details of the various databases stored in the storage unit 370 will be described with reference to FIG. 4 and therefore are not described here.

Next, with reference to FIG. 4, the various databases stored in the storage unit according to the embodiments of the present disclosure will be described.

FIG. 4 is a view illustrating an example of the various databases stored in the storage unit according to the embodiments of the present disclosure. Information in the various databases illustrated in FIG. 4 may be used by the production plan generating unit and may be updated appropriately by the production plan generating unit or the administrator of the factory.

The production plan database 371 stores, for each product identifier as text for uniquely identifying the products manufactured in the factory (e.g., the factory 210 illustrated in FIG. 2), a delivery date that serves as the deadline for delivery of the product to a customer, and a manufacturing order of the product in the manufacturing process. The manufacturing order is information that indicates the order of the product in a specific manufacturing process and may be expressed by buckets and slots as will be described later.

The production plan information database 372 stores, for the product identifier of each product, a manufacturing process identifier to uniquely identify a manufacturing process to be performed for the product, and the manufacturing order for the product in the manufacturing process.

The alternate manufacturing process database 373 stores, for each failure identifier, which is text for uniquely identifying a failure that may occur in a manufacturing process, a product identifier of the products affected by the failure, an alternate manufacturing process identifier which is text for uniquely identifying an alternate manufacturing process (hereinafter referred to as an "alternate manufacturing process") to be executed instead of the manufacturing process in which the failure occurs, and the manufacturing order for the product in the alternate manufacturing process.

As will be described later, in a case where a failure occurs in a given manufacturing process, for example, an alternate manufacturing process to be executed instead of the manufacturing process where the failure occurs is specified by use of the alternate manufacturing process database 373, so that a new production plan that suppresses the effects of failures can be generated in real time.

The manufacturing cost database 374 stores, for the manufacturing process identifier of each manufacturing process, a cost type that indicates the types of cost arising due to execution of the manufacturing process, and a cost formula to calculate the cost.

The cost type here may include, for example, labor costs, maintenance costs, inventory carrying costs, backlog costs, and overhead costs. Further, the cost formula varies depending on the type of cost and is a formula to calculate costs based on variables such as man-hours, pay rate, time required for a manufacturing process, the quantity of a product to be manufactured, a raw material used in the manufacturing process, an initial cost of the raw material, the number of necessary automated storage and retrieval units, and the size thereof, for example.

The failure expectation database 375 stores, for the manufacturing process identifier of each manufacturing process, a product pattern that indicates a specific process order of a plurality of specific products, a failure probability of the product pattern, and a failure prevention constraint.

As a general rule, in factories, the machines that perform manufacturing processes operate in different modes for different products to be processed. However, when changing operation modes, it is more likely for failures to occur. Accordingly, at times when different products are processed consecutively, it is necessary for the mode of the machine to be switched to a different mode, and therefore, a failure may occur. As a result, the failure probability varies depending on the specific process order (here referred to as a "product pattern") of a plurality of specific products. The failure probability of each product pattern may be calculated by machine learning or statistical analysis means for analyzing past failure data, for example.

Further, the failure prevention constraint here is information that specifies additional conditions to suppress the probability of failure occurrence. For example, the failure prevention constraint may include a product manufacturing order, a product pattern, an operation mode of the machine or the like that suppresses the probability of failure occurrence.

The failure probability of each product pattern and the failure prevention constraint to suppress the failure probability are stored in the failure expectation database 375 such that at the time of production plan generation, it is possible to generate a production plan that can avoid product patterns for which failure is likely to occur.

The failure identification information database 376 stores, for the failure identifier of each failure, a manufacturing process identifier of the manufacturing processes expected to be affected by the failure.

The structural constraint database 377 stores, for the manufacturing process identifier of each manufacturing process, a structural constraint that defines the manufacturing in the manufacturing process. The structural constraint here is information specifying the conditions for the manufacturing process. The structural constraint may include the raw materials, temperature/humidity, time, pre-steps, post-steps, and the like necessary to execute a given manufacturing process. As an example, a manufacturing process of "assembling" may have a structural constraint requiring that a manufacturing process of "coating" has already been executed.

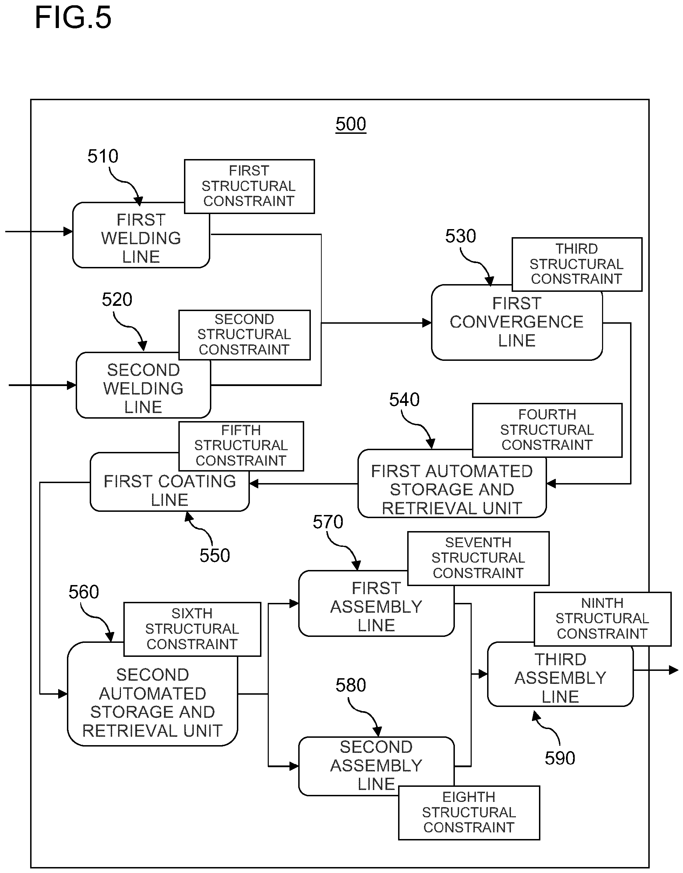

Next, with reference to FIG. 5, an example of the manufacturing process flow in the production plan according to the embodiments of the present disclosure will be described.

FIG. 5 is a view illustrating an example of a manufacturing process flow 500 in the production plan according to the embodiments of the present disclosure. The production plan may be generated by the production plan generating unit according to the embodiments of the present disclosure, for example.

The manufacturing process flow 500 in the production plan may include manufacturing processes to manufacture a component (a door or the like) used for an automobile, for example, and is mainly constituted by manufacturing processes of welding, coating, and assembling.

More specifically, as illustrated in FIG. 5, the manufacturing process flow 500 in the production plan includes a first welding line 510, a second welding line 520, a first convergence line 530, a first automated storage and retrieval unit 540, a first coating line 550, a second automated storage and retrieval unit 560, a first assembly line 570, a second assembly line 580, and a third assembly line 590.

Further, as illustrated in FIG. 5, the first welding line 510, the second welding line 520, the first convergence line 530, the first automated storage and retrieval unit 540, the first coating line 550, the second automated storage and retrieval unit 560, the first assembly line 570, the second assembly line 580, and the third assembly line 590 are associated with respective structural constraints (first to ninth structural constraints). The structural constraints specify conditions needed to be satisfied to execute respective manufacturing processes.

As illustrated in FIG. 5, first, the first welding line 510 and the second welding line 520 are performed in parallel. After that, the first welding line 510 and the second welding line 520 converge in the first convergence line 530.

Subsequently, one or more products are stored in the first automated storage and retrieval unit (ASRU) 540. An automated storage and retrieval unit here indicates a unit in which storage and takeout of articles are automated and may be used, for example, such that a given product is primarily stored to change the manufacturing order or a given product is kept for a given period of time to cool or dry the product.

Subsequently, after the first coating line 550 is performed, one or more products are kept in the second automated storage and retrieval unit 560. The second automated storage and retrieval unit 560 here may be the same automated storage and retrieval unit as the first automated storage and retrieval unit 540 or may be different from the first automated storage and retrieval unit 540.

The first assembly line 570 and the second assembly line 580 are performed in parallel and converge in the third assembly line 580.

As described in the manufacturing process flow 500 in the production plan illustrated in FIG. 5, a product is manufactured in accordance with a production plan constituted by specific manufacturing processes and structural constraints corresponding to the specific manufacturing processes. Further, as will be described later, the production plan can be generated in real time to respond to a sudden change such as a failure in the factory, a customer request, or delay in procurement of raw materials or components in consideration of costs or the failure probability in the manufacturing processes.

Note that the manufacturing process flow 500 in the production plan illustrated in FIG. 5 is just an example, and the manufacturing processes included in the production plan, the use of the automated storage and retrieval units, and the like are determined appropriately based on various elements such as the requested product, the criterion for costs, and the failure probability.

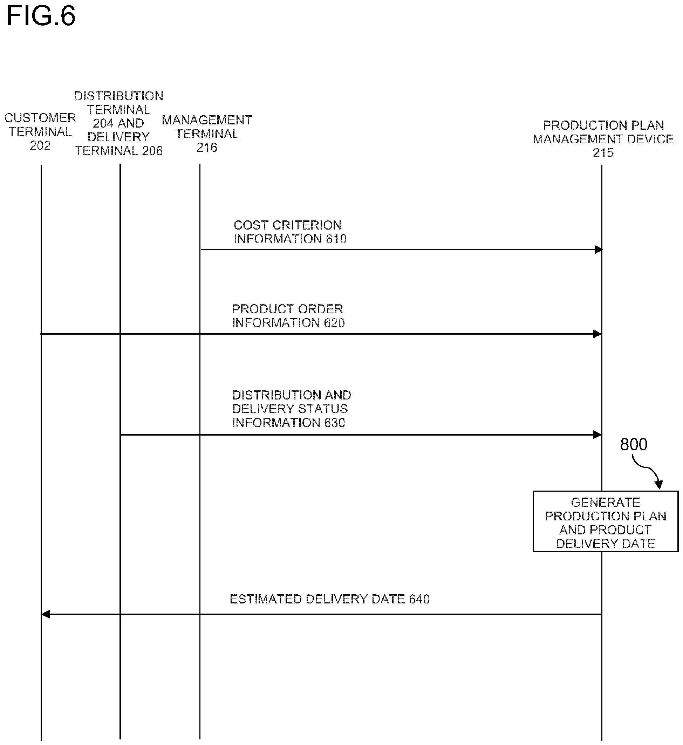

Next, with reference to FIG. 6, the communication flow of various pieces of information in the production plan management system according to the embodiments of the present disclosure will be described.

FIG. 6 is a view illustrating an example of the communication flow of various pieces of information in the production plan management system according to the embodiment of this disclosure. FIG. 6 illustrates the flow of information between the customer terminal 202, the distribution terminal 204, the delivery terminal 206, the management terminal 216, and the production plan management device 215. As described above, the flow of information (communication) may be performed via a given communication network (e.g., the communication network 208 illustrated in FIG. 2) such as the Internet, a LAN (Local Area Network), a MAN (Metropolitan Area Network), or a WAN (Wide Area Network), for example.

The management terminal 216 inputs cost criterion information 610 into the production plan management device 215. As described above, herein, the management terminal 216 may receive the cost criterion information 610 from the administrator of the factory via a GUI (Graphical User Interface) provided by a smartphone or a personal computer, and after that, the management terminal 216 may transfer the cost criterion information 610 to the production plan management device 215.

The cost criterion information 610 here is information that specifies a budget target for a specific production plan. The cost criterion information 610 may include budget targets for various costs arising due to execution of the production plan, such as labor costs, maintenance costs, inventory carrying costs, backlog costs, overhead costs, and the like. Further, as will be described later, in one embodiment, the cost criterion information 610 may include a weight, a priority, or the like that indicates the importance of each of the labor cost, the maintenance cost, the inventory carrying cost, the backlog cost, and the overhead cost.

The customer terminal 202 transmits product order information 620 to the production plan management device 215. As described above, the product order information 620 is information to specify an item, quantity, and a desired delivery date of a product requested by a customer and may be created by the customer by use of the customer terminal 202, for example.

The distribution terminal 204 and the delivery terminal 206 transmit distribution and delivery status information 630 to the production plan management device 215. Herein, the distribution terminal 204 and the delivery terminal 206 may create the distribution and delivery status information 630 in collaboration with each other or may individually transmit information indicating the status of distribution and a status indicating the status of delivery to the production plan management device 215.

The distribution and delivery status information 630 here is information that indicates the status of availability of distribution and delivery and may include a time (the number of days or the like) required for distribution and delivery of a product, for example.

Upon receipt of the cost criterion information 610, the product order information 620, and the distribution and delivery status information 630, the production plan management device 215 performs an estimated delivery date determination process 800 for determining an estimated delivery date 640 as a date on which the product specified by the product order information 620 can be delivered to the customer. After that, the production plan management device 215 transmits the information regarding the estimated delivery date 640 determined by performing the estimated delivery date determination process 800 to the customer terminal 202.

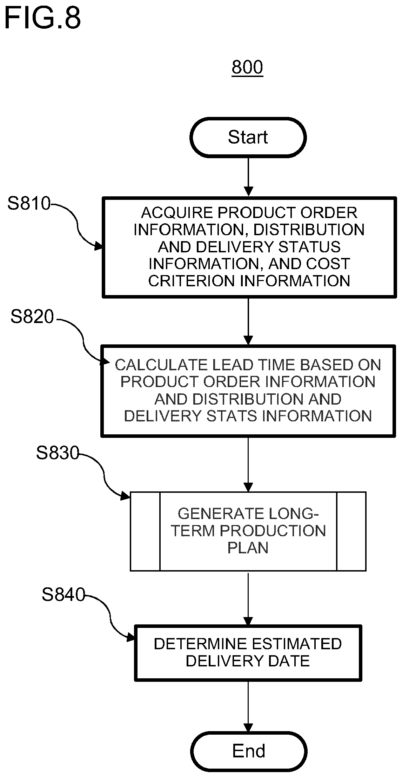

Note that details of the estimated delivery date determination process 800 will be described with reference to FIG. 8 and therefore are not described here.

In this way, the production plan management system can acquire various pieces of information necessary to generate a production plan.

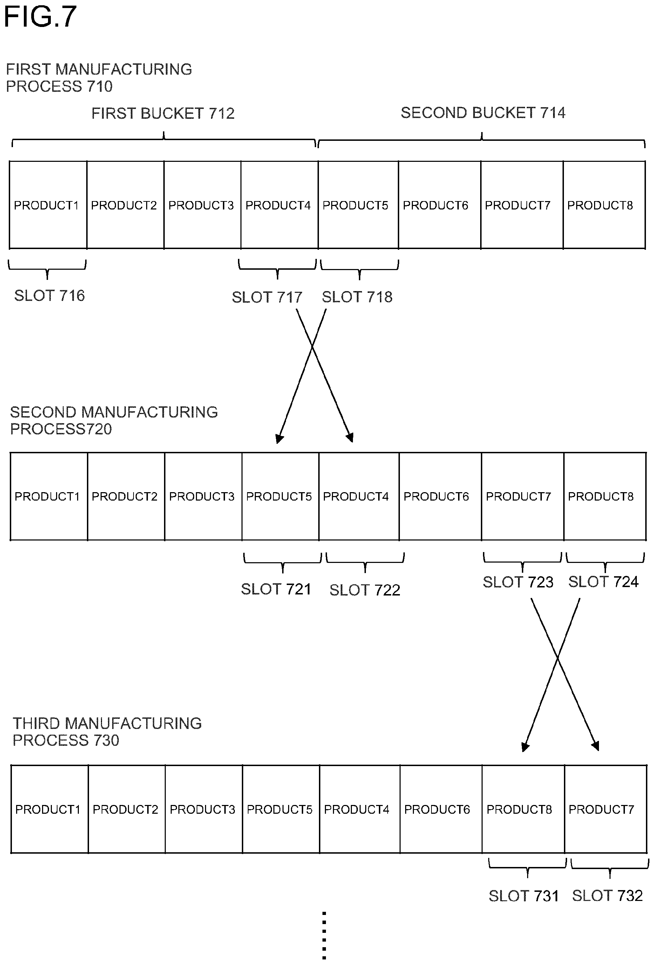

Next, with reference to FIG. 7, the configuration of the manufacturing processes in the production plan according to the embodiments of the present disclosure will be described.

FIG. 7 describes the configuration of the manufacturing processes in the production plan according to the embodiments of the present disclosure. As illustrated in FIG. 7, a manufacturing process is constituted by one or more "buckets." A "bucket" here refers to a logical partition to arrange a product to be subjected to a specific manufacturing process. The number of buckets included in one manufacturing process may be set by the administrator of the factory or the like and may be set based on, for example, the number of products to be subjected to the specific manufacturing process (e.g., five products may be placed in one bucket), the type of product (e.g., products of the same type are placed in one bucket), the shift-change time of operators in the factory (products to be processed before a shift-change may be placed in one bucket), or the like.

Further, one bucket includes one or more "slots." A slot here is a specific position in the manufacturing order of a product to be subjected to a manufacturing process.

As an example, as illustrated in FIG. 7, a first manufacturing process includes a first bucket 712 and a second bucket 714, and the first bucket 712 and the second bucket 714 each include four slots 716. A different product is placed in each slot (a product 1 to a product 8).

The position of a slot in a manufacturing process of a product may be changed based on a failure, delay, a customer request, an instruction from the administrator of the factory, and the like. For example, as illustrated in FIG. 7, in a first manufacturing process 710, a product 4 is placed in a fourth slot 717, and a product 5 is placed in a fifth slot 718, but in a second manufacturing process 720, the product 4 is changed to a fifth slot 722, and the product 5 is changed to a fourth slot 721.

Similarly, in the second manufacturing process 720, a product 7 is placed in a seventh slot 723, and a product 8 is placed in an eighth slot 724, but in a third manufacturing process 730, the product 7 is changed to an eighth slot 732, and the product 8 is changed to a seventh slot 731.

When products to be subjected to manufacturing processes are arranged by buckets and slots as such, it is possible to easily manage when and which manufacturing process a specific product is subjected to, and additionally, in cases where a sudden plan change is requested due to a failure, delay, a customer request, an instruction from the administrator of the factory or the like, it is possible to generate a production plan in real time by reconfiguring the manufacturing order of products by bucket or by slot.

Next, with reference to FIG. 8, the flow of an estimated delivery date determination process according to the embodiments of the present disclosure will be described.

FIG. 8 is a view illustrating an example of the flow of a determination process 800 of determining an estimated delivery date according to the embodiments of the present disclosure. The determination process 800 of determining an estimated delivery date as illustrated in FIG. 8 is a process for determining an estimated delivery date on which a product can be delivered to a customer and is executed by the aforementioned production plan generating unit (e.g., the production plan generating unit 368 illustrated in FIG. 3).

First, in step S810, the production plan generating unit acquires product order information, distribution and delivery status information, and cost criterion information. Herein, the production plan generating unit may acquire the product order information, the distribution and delivery status information, and the cost criterion information by the communication flow illustrated in FIG. 6.

Subsequently, in step S820, the production plan generating unit calculates a lead time of distribution and delivery based on the product order information and the distribution and delivery status information acquired in step S810. The lead time here indicates a time from the time when a product is shipped from the factory until the time when the product is delivered to a customer and can be calculated based on the availability of distribution and delivery as indicated by the distribution and delivery status information.

Subsequently, in step S830, the production plan generating unit generates a production plan for a long term (hereinafter referred to as a "long-term production plan"). The "long term" here may be a period of five or more days, for example, but this disclosure is not limited to this, and a term may be selected based on a time required for manufacture of a product. As an example, the long-term production plan may be a production plan for one week. Herein, the production plan generating unit may generate a production plan satisfying a desired delivery date of the customer as indicated by the product order information.

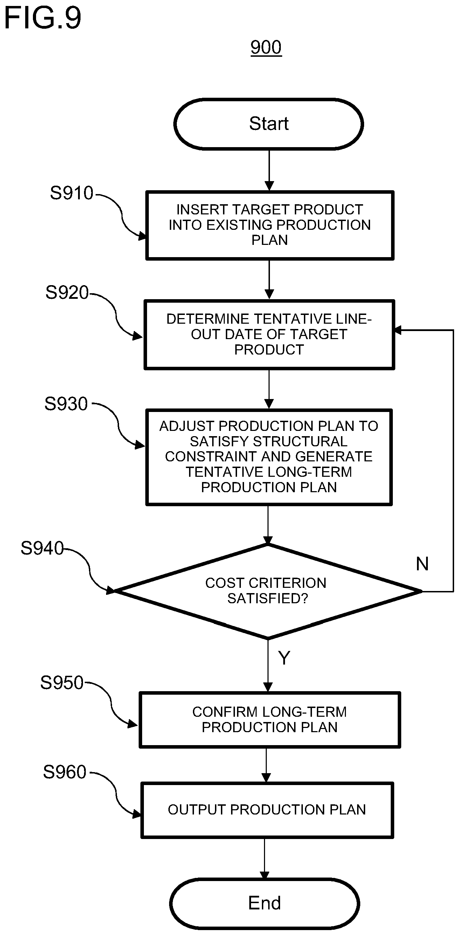

Note that details of a process of generating the long-term production plan will be described with reference to FIG. 9 and therefore are not described here.

Subsequently, in step S840, the production plan generating unit determines an estimated delivery date on which a product specified by the product order information (that is, a product requested by the customer) can be delivered to the customer based on the lead time calculated in step S820 and the long-term production plan generated in step S830.

More specifically, the production plan generating unit calculates, from the long-term production plan generated in step S830, a line-out date that is a date on which the manufacture of the product in the factory is completed and the product is shipped from the factory, and determines an estimated delivery date from the line-out date and the lead time of distribution and delivery.

After that, information on the estimated delivery date determined here is transmitted to a customer terminal (e.g., the customer terminal 202 illustrated in FIG. 2).

According to the estimated delivery date determination process 800 described with reference to FIG. 8, the estimated delivery date of the product requested by the customer can be determined quickly and notified to the customer.

Next, with reference to FIG. 9, a long-term production plan generating process according to the embodiment of the present disclosure will be described.

FIG. 9 is a view illustrating an example of a long-term production plan generating process 900 according to the embodiments of the present disclosure. In this disclosure, the production in a production plan is divided into a long-term production plan for a long period and a short-term production plan for a short period. The "long term" here may be a period of five or more days, for example, but this disclosure is not limited to this, and a term may be selected based on a time required for manufacture of a product. As an example, the long-term production plan may be a production plan for one week.

The long-term production plan generating process 900 illustrated in FIG. 9 is a process for generating a long-term production plan satisfying a cost criterion, structural constraints, or the like by changing an existing production plan formed in advance (hereinafter referred to as an "existing production plan") to include a product requested by a customer and is executed by the aforementioned production plan generating unit (e.g., the production plan generating unit 368 illustrated in FIG. 3).

Note that the long-term production plan generating process 900 illustrated in FIG. 9 may be performed when the production plan generating unit receives new product order information from a customer, for example. Further, the existing production plan here may be stored in advance in the aforementioned production plan database 371, for example.

First, in step S910, the production plan generating unit inserts, into the existing production plan of the factory, a product (hereinafter referred to as a "target product") specified by product order information (e.g., the product order information 620 illustrated in FIG. 6).

Herein, the expression "to insert a target product into an existing production plan" indicates that the target product is assigned to a slot of a given bucket of a manufacturing process of the existing production plan. In one embodiment, the target product may be inserted in a manufacturing process including a product of the same type as the target product. Further, which slot of which bucket in a manufacturing process the target product is inserted into may be determined by the administrator of the factory or a trained machine learning technique.

Subsequently, in step S920, the production plan generating unit calculates a tentative line-out date based on a desired delivery date included in the product order information, a procurement state of raw materials, a production plan in which the target product is currently inserted, and the like. The tentative line-out date here is a date on which the manufacture of the target product in the factory is completed, and the target product is scheduled to be shipped from the factory; however, at the current time, as it has not been determined whether or not the production plan in which the target product is inserted satisfies the conditions such as the structural constraints of the factory or the cost criterion, the tentative line-out date is not a fixed schedule but is tentative.

Subsequently, in step S930, the production plan generating unit adjusts the existing production plan in which the target product is inserted to satisfy the structural constraints stored in the aforementioned structural constraint database (e.g., the structural constraint database illustrated in FIG. 4) and generates a tentative long-term production plan.

As described above, a structural constraint here is information for specifying conditions for the manufacturing process included in the production plan and may include raw materials, temperature/humidity, a time, and pre-step/post-step that are necessary to execute a given manufacturing process, a position of a machine to perform each manufacturing process in the factory, a processing capability, a usage state, or the like.

Here, adjusting the existing production plan in which the target product is inserted to satisfy the structural constraints may include, for example, a given action such as changing the order of manufacturing process in the production plan, changing the manufacturing order of products by changing the position of a bucket or a slot for a specific product, or raising the processing capability by assigning more machines or operators to a specific manufacturing process.

Note that, since the determination of whether the cost criterion is satisfied or not has not been not performed, the tentative long-term production plan is not a confirmed production plan but is tentative.

Subsequently, in step S940, the production plan generating unit determines whether or not the production plan satisfies the cost criterion included in the aforementioned cost criterion information (e.g., the cost criterion information 610 illustrated in FIG. 6). Herein, the production plan generating unit determines whether or not costs (labor costs, maintenance costs, inventory carrying costs, backlog costs, and overhead costs) of the tentative long-term production plan generated in step S930 satisfy the cost criterion specified by the cost criterion information. For example, the production plan generating unit may determine whether or not the costs of the tentative long-term production plan generated in step S930 fall within a budget specified by the cost criterion information or determine whether or not each of the labor cost, the maintenance cost, the inventory carrying cost, the backlog cost, and the overhead cost satisfies a weight or a priority specified by the cost criterion information.

In the case that the production plan satisfies the cost criterion, the process proceeds to step S950, and in the case where the production plan does not satisfy the cost criterion, the process returns to step S920, and the determination of the tentative line-out date in step S920 and the adjustment of the production plan in step 930 are performed again to satisfy the cost criterion.

Subsequently, in step S950, the production plan generating unit confirms the long-term production plan determined to satisfy the cost criterion in step S940. More specifically, herein, the flow of the manufacturing processes specified in the long-term production plan, the type of a product to be manufactured in each manufacturing process, the quantity of the product, the manufacturing order of the product, the line-out date of a target product, and so on are determined. Accordingly, the tentative line-out date determined in step S920 becomes a confirmed line-out date. The confirmed line-out date is used at the time of determining an estimated delivery date for the target product in step S840 of the aforementioned estimated delivery date determination process 800, for example.

Subsequently, in step S960, the production plan generating unit outputs the long-term production plan confirmed in step S950. Here, the production plan generating unit may store the confirmed long-term production plan in the aforementioned production plan database (e.g., the production plan database 371 illustrated in FIG. 4) or may display the confirmed long-term production plan to the administrator of the factory, the operators, or the like via a display unit of the management terminal (e.g., the management terminal 216 illustrated in FIG. 2).

With the long-term production plan generating process 900 described above, a long-term production plan to manufacture the product requested by the customer can be generated in consideration of the structural constraints of the factory and the cost criterion.

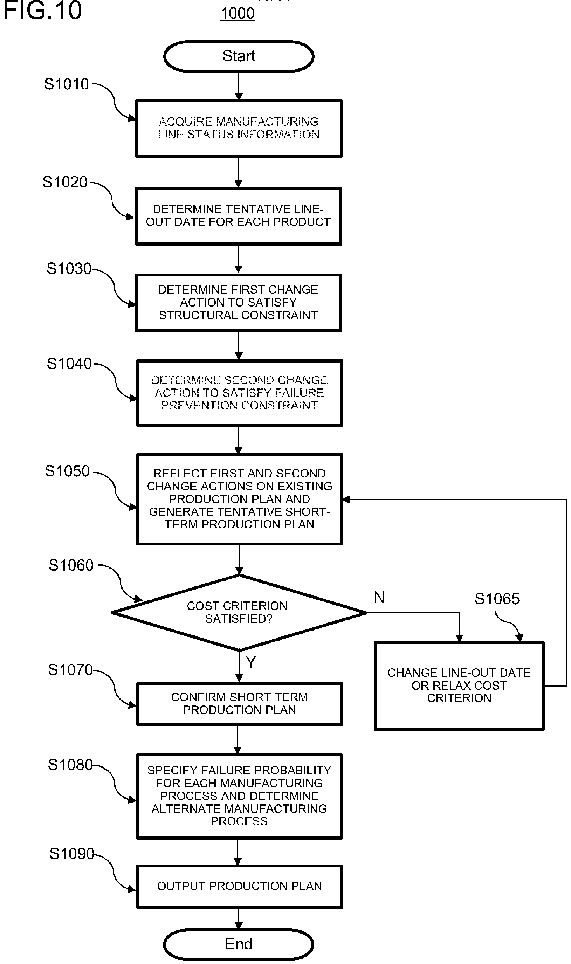

Next, with reference to FIG. 10, a short-term production plan generating process according to the embodiments of the present disclosure will be described.

FIG. 10 is a view illustrating an example of the flow of a short-term production plan generating process 1000 according to the embodiments of the present disclosure.

As described above, in the present disclosure, the production of a production plan is divided into a long-term production plan for a long period and a short-term production plan for a short period. A "short term" here is a fixed period of time constituting the aforementioned long-term production plan and may be selected based on a time required for manufacture of a product. As an example, the short-term production plan may be a production plan for one day. Further, the short-term production plan generating process 1000 may be performed by a given cycle. For example, in a case where the short-term production plan is a production plan for one day, the short-term production plan generating process 1000 may be performed every day before the manufacturing processes are started, for example. The short-term production plan generating process 1000 may be started automatically or may be started by the administrator of the factory.

The short-term production plan generating process 1000 illustrated in FIG. 10 is a process of generating a short-term production plan satisfying a cost criterion, structural constraints, or the like by changing an existing production plan formed in advance (hereinafter referred to as an "existing production plan") to include a product requested by a customer and is executed by the aforementioned production plan generating unit (e.g., the production plan generating unit 368 illustrated in FIG. 3).

First, in step S1010, the production plan generating unit acquires manufacturing line status information. The manufacturing line status information is information that indicates a current status of each manufacturing line in the factory and includes the position or the state of each product in a manufacturing line, for example. In one embodiment, the production plan generating unit may acquire the manufacturing line status information by acquiring information from QR codes or RFID tags attached to each product by use of a sensor device connected to the network in the factory and aggregating this information. Further, in one embodiment, the production plan generating unit may acquire manufacturing line status information by analyzing, using existing object detecting means, a video image from a camera configured to taking video images of a manufacturing line.

Subsequently, in step S1020, the production plan generating unit calculates a tentative line-out date for each product based on a desired delivery date included in the product order information, a procurement state of raw materials, and so on.

As described above, the tentative line-out date here is a date on which the manufacture of a product in the factory is completed, and the product is scheduled to be shipped from the factory; however, at the current time, as it has not been determined whether or not the existing production plan in which the product is inserted satisfies conditions such as the structural constraints of the factory or the cost criterion, the tentative line-out date is not a fixed schedule but is tentative.

Subsequently, in step S1030, the production plan generating unit determines a first change action to change the existing production plan to satisfy the structural constraints stored in the aforementioned structural constraint database (e.g., the structural constraint database 377 illustrated in FIG. 4).

The structural constraint used in step S1030 may be the same as the structural constraints used in step S930 of the aforementioned long-term production plan generating process 900 or may be structural constraints different from the structural constraints used in step S930.

The first change action is information indicating how the existing production plan is required to be changed to satisfy the structural constraint and may include a given action such as changing of the order of manufacturing processes in the production plan, changing of the manufacturing order of products by changing the position of a bucket or a slot for a specific product, or raising of the processing capability by assigning more machines or operators to a specific manufacturing process, for example.

Further, the first change action may specify an automated storage and retrieval unit necessary to execute the first change action.

Subsequently, in step S1040, the production plan generating unit determines a second change action to change the existing production plan to satisfy a failure prevention constraint stored in the aforementioned failure prevention constraint database (e.g., the failure expectation database 375 illustrated in FIG. 4).

As described above, the failure prevention constraint here is information to specify an additional condition to suppress the probability of failure occurrence. For example, the failure prevention constraint may include a manufacturing order of a product, a product pattern, an operation mode of a machine, or the like that suppresses the probability of a failure occurrence.

The second change action is information indicating how the existing production plan is required to be changed to satisfy the failure prevention constraint and may include a given action such as changing of the order of manufacturing processes in the production plan, changing of the manufacturing order of products by changing the position of a bucket or a slot for a specific product, or raising of the processing capability by assigning more machines or operators to a specific manufacturing process, for example.

Further, the second change action may specify an automated storage and retrieval unit necessary to execute the second change action.

Subsequently, in step S1050, the production plan generating unit reflects the first change action determined in step S1030 and the second change action determined in step S1040 on the existing production plan to generate a tentative short-term production plan.

Here, the production plan generating unit may generate the tentative short-term production plan by changing the order of buckets and slots expressing the existing production plan based on the first change action and the second change action.

As an example, in a case where the first change action and the second change action specify changing a manufacturing order of "product 1, product 2, product 3, product 4" to a manufacturing order of "product 3, product 2, product 4, product 1," the production plan generating unit may generate the tentative short-term production plan such that a bucket with the manufacturing order of "product 1, product 2, product 3, product 4" is changed to a bucket with "product 3, product 2, product 4, product 1" by placing product 1 in the fourth slot, placing product 3 in the first slot, and placing product 4 in the third slot.

By changing the manufacturing order of the existing production plan to satisfy the structural constraints and the failure prevention constraint as such, a tentative short-term production plan that suppresses the probability of failure occurrence can be acquired. Note that, since the determination of whether the cost criterion is satisfied or not has not been performed, the tentative short-term production plan is not a confirmed production plan but is tentative.

Subsequently, in step S1060, the production plan generating unit determines whether or not the tentative short-term production plan generated in step S1050 satisfies the cost criterion included in the aforementioned cost criterion information (e.g., the cost criterion information 610 illustrated in FIG. 6).

Here, the production plan generating unit determines whether or not the costs (labor costs, maintenance costs, inventory carrying costs, backlog costs, and overhead costs) of the tentative short-term production plan generated in step S930 satisfy a cost criterion specified in the cost criterion information. For example, the production plan generating unit may determine whether or not the costs of the tentative short-term production plan generated in step S1050 fall within a budget specified by the cost criterion information or determine whether or not each of the labor cost, the maintenance cost, the inventory carrying cost, the backlog cost, the overhead cost, and so on satisfies a weight or a priority specified by the cost criterion information.

Further, the cost criterion information here may be the same as the cost criterion used in step S940 of the aforementioned long-term production plan generating process 900 or may be a cost criterion different from the cost criterion used in step S940.

In the case that the tentative short-term production plan satisfies the cost criterion, the process proceeds to step S1070, and in the case that the tentative short-term production plan does not satisfy the cost criterion, the process proceeds to step S1065.

In step S1065, the production plan generating unit changes the tentative line-out date for one or more products or relaxes the cost criterion so that the tentative short-term production plan satisfies the cost criterion. Herein, the production plan generating unit may determine a new line-out date and/or a new cost criterion based on past data or may prompt the administrator of the factory to set a new line-out date and/or a new cost criterion.

After that, the process returns to step S1050, and the manufacturing order in the manufacturing process is changed in accordance with the new line-out date and/or the new cost criterion appropriately.

Subsequently, in step S1070, the production plan generating unit confirms the short-term production plan determined to satisfy the cost criterion in step S1060. More specifically, the flow of manufacturing processes specified in the short-term production plan, the type of a product to be manufactured in each manufacturing process, the quantity of the product, the manufacturing order, the line-out date of the product, and the like are determined. Accordingly, the tentative line-out date determined in step S1020 becomes a confirmed line-out date.

Subsequently, in step S1080, the production plan generating unit specifies, for each manufacturing process in the short-term production plan confirmed in step S1070, a failure probability in the manufacturing process, and in the case that the specified failure probability exceeds a predetermined failure probability criterion, the production plan generating unit determines an alternate manufacturing process.

More specifically, the production plan generating unit specifies a failure probability for each manufacturing process in the confirmed short-term production plan by use of the aforementioned failure expectation database (e.g., the failure expectation database 375 illustrated in FIG. 4). As described above, the failure probability of each manufacturing process may be calculated by machine learning or statistical analysis means for analyzing past failure data, for example.

After that, the production plan generating unit compares the specified failure probability of each manufacturing process with a predetermined failure probability criterion. The failure probability criterion may be a value (e.g., "25%," "30%," and the like) of a failure probability set in advance. In the case that the failure probability of the manufacturing process exceeds the predetermined failure probability criterion, the production plan generating unit determines an alternate manufacturing process to be executed instead of the manufacture step when a failure occurs.

Here, the production plan generating unit may specify and determine, as the alternate manufacturing process, a manufacturing process that includes content similar to the manufacturing process determined to have a failure probability exceeding the failure probability criterion and that has a failure probability not exceeding the failure probability criterion from the manufacturing processes stored in the failure expectation database, for example. The alternate manufacturing process determined here is stored in the aforementioned alternate manufacturing process database (e.g., the alternate manufacturing process database 373 illustrated in FIG. 4).

Subsequently, in step S1090, the production plan generating unit outputs the short-term production plan confirmed in step S1080. Here, the production plan generating unit may store the confirmed short-term production plan in the aforementioned production plan database (e.g., the production plan database 371 illustrated in FIG. 4) or may display the confirmed long-term production plan to the administrator of the factory, the operators, or the like via the display unit of the management terminal (e.g., the management terminal 216 illustrated in FIG. 2).

According to the short-term production plan generating process 1000 described above, a short-term production plan for manufacturing a product requested by the customer can be generated in real time in consideration of the structural constraints of the factory, the failure probability, and the cost criterion.

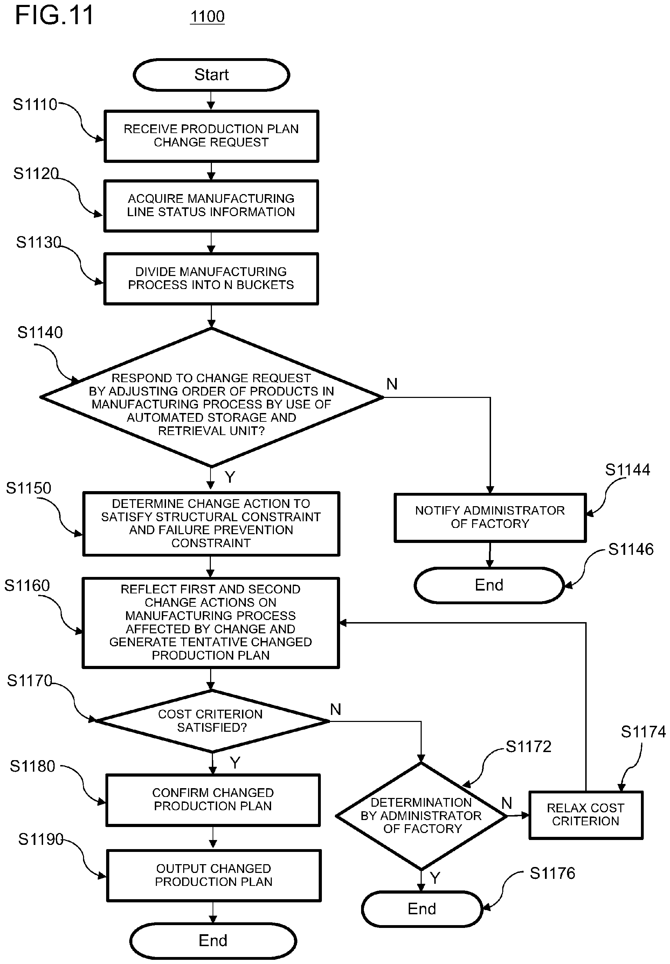

Next, with reference to FIG. 11, a production plan change process according to the embodiments of the present disclosure will be described.

FIG. 11 is a view illustrating an example of the flow of a production plan change process 1100 according to the embodiments of the present disclosure. The production plan change process 1100 illustrated in FIG. 11 is a process for changing, in real time, in the case that a sudden plan change due to a customer request, delay in procurement of raw materials or components, or the like occurs, an existing production plan formed in advance (hereinafter referred to as an "existing production plan") to respond to the sudden change and generating a changed production plan, and is executed by the aforementioned production plan generating unit (e.g., the production plan generating unit 368 illustrated in FIG. 3).

First, in step S1110, the production plan generating unit receives a production plan change request. Here, a communication unit of a production plan generating device may receive the production plan change request from a customer terminal, a distribution terminal, or a delivery terminal via a communication network and then transfer it to the production plan generating unit. The production plan change request here may be information requesting a change in the item, the quantity, or the desired delivery date included in the product order information, information providing notification of a change about the distribution status or the delivery status included in the distribution and delivery status information, or information providing notice of a change external to the factory, such as a change about the procurement status of raw materials used for manufacture in the factory, or the like.

For instance, as an example, the production plan change request may be information requesting that a specific product be supplied earlier than the desired delivery date included in the product order information. Further, as another example, the production plan change request may be information providing notification that the delivery of raw materials used to manufacture a product is behind schedule.

Then, in step S1120, the production plan generating unit acquires manufacturing line status information. The manufacturing line status information is information that indicates the current status of each manufacturing line in the factory and includes the position or the state of each product in a manufacturing line, for example. In one embodiment, the production plan generating unit may acquire the manufacturing line status information by acquiring information from QR codes or RFID tags attached to each product by use of a sensor device connected to the network in the factory and aggregating this information. Further, in one embodiment, the production plan generating unit may acquire manufacturing line status information by analyzing, using existing object detecting means, a video image from a camera configured to taking video images of a manufacturing line.

Then, in step S1130, the production plan generating unit divides the existing production plan into N buckets. Here, the number of buckets N may be set by the administrator of the factory, or the like, and may be set, for example, based on the number of products to be subjected to a specific manufacturing process (e.g., five products may be placed in one bucket), the type of product (e.g., products of the same type are placed in one bucket), the shift-change time of operators in the factory (products to be processed before a shift-change may be placed in one bucket), or the like.

As will be described later, when the existing production plan is divided into a predetermined number of buckets, the manufacturing processes may be easily reconfigured.

Subsequently, in step S1140, the production plan generating unit adjusts the manufacturing order of products in the manufacturing processes by use of the automated storage and retrieval unit and checks whether or not it is possible to respond to the plan change requested by the production plan change request received in step S1120.

For example, the production plan generating unit analyzes the existing production plan, and in the case that there is a product A that has a margin before the estimated delivery date, the production plan generating unit may determine whether or not the conditions of the plan change requested by the production plan change request are satisfied by using an automated storage and retrieval unit to move a product B for which the estimated delivery date has been advanced due to a plan change to a slot downstream from product A (that is, a slot processed earlier) in the manufacturing order in the manufacturing process.

As a result of the process of step S1140, in a case that it is determined that the plan change can be responded to, the process proceeds to step S1150, and in the case where it is determined that the plan change is not able to be responded to, the process proceeds to step S1144.

In step S1144, the production plan generating unit transmits to the administrator of the factory or the like, a notification indicating that the plan change requested by the production plan change request is not performable, and the process is ended in step S1146.

In step S1150, the production plan generating unit determines a change action to change the existing production plan to satisfy the aforementioned structural constraints and the aforementioned failure prevention constraint.

Step S1150 is a step corresponding to a combination of step S1030 and step S1040 in the aforementioned short-term production plan generating process 1000, and therefore, a redundant description thereof is omitted here for convenience of description.

In step S1160, the production plan generating unit reflects the change action determined in step S1150 on the manufacturing processes affected by the plan change requested by the production plan change request in the existing production plan, and generates a tentative changed production plan.

Here, the production plan generating unit may generate a tentative short-term production plan by changing the order of buckets and slots expressing the existing production plan based on the change action.

As an example, in a case where the first change action and the second change action specify changing a manufacturing order of "product 1, product 2, product 3, product 4" to a manufacturing order of "product 3, product 2, product 4, product 1," the production plan generating unit may generate the tentative short-period production plan such that a bucket with the manufacturing order of "product 1, product 2, product 3, product 4" is changed to a bucket with "product 3, product 2, product 4, product 1" by placing product 1 to in the fourth slot, placing product 3 in the first slot, and placing product 4 in the third slot.

By changing the manufacturing order of the existing production plan to satisfy the structural constraints and the failure prevention constraint, a tentative changed production plan that suppresses the probability of failure occurrence can be acquired. Note that, since the determination of whether the cost criterion is satisfied has not been performed, the tentative changed production plan is not a confirmed production plan but is tentative.

Subsequently, in step S1170, the production plan generating unit determines whether or not the tentative changed production plan generated in step S1160 satisfies the cost criterion included in the cost criterion information (e.g., the cost criterion information 610 illustrated in FIG. 6). The cost criterion information here is cost criterion information including additional costs (additional overhead costs arising due to failure, additional charges for urgent delivery, or the like) to be required by the production plan change request, and as described above, the cost criterion information may be set by the administrator of the factory or the like.

Herein, the production plan generating unit determines whether or not costs (labor costs, maintenance costs, inventory carrying costs, backlog costs, and overhead costs) of the tentative changed production plan generated in step S1160 satisfy the cost criterion specified by the cost criterion information. For example, the production plan generating unit may determine whether or not the costs of the tentative changed production plan generated in step S1160 fall within a budget specified by the cost criterion information or may determine whether or not each of the labor cost, the maintenance cost, the inventory carrying cost, the backlog cost, the overhead cost, and the like satisfy a weight or a priority specified by the cost criterion information.

When the tentative changed production plan satisfies the cost criterion, the process proceeds to step S1180, and when the tentative changed production plan does not satisfy the cost criterion, the process proceeds to step S1172.

In step S1172, the production plan generating unit inquires of the administrator of the factory whether the cost criterion should be relaxed or not. For example, the production plan generating unit may display a notification to inquire whether the cost criterion is to be relaxed or not on the GUI of the aforementioned management terminal and receive an input from the administrator of the factory.

In the case that the cost criterion is not to be relaxed based on the input from the administrator of the factory, the process is ended in step S1176. Meanwhile, in the case that the cost criterion is to be relaxed, the process proceeds to step 1174.

In step S1174, the production plan generating unit determines a relaxed cost criterion based on the input from the administrator of the factory. After that, the process proceeds to step S1160, and the manufacturing order in the manufacturing process is changed in accordance with the new line-out date and/or the new cost criterion appropriately.

Subsequently, in step S1180, the production plan generating unit confirms the changed production plan determined to satisfy the cost criterion in step S1170. More specifically, here, the flow of manufacturing processes specified in the changed production plan, the type of the product to be manufactured in each manufacturing process, the quantity of the product, the manufacturing order, the line-out date of the product, and the like are determined.

Subsequently, in step S1190, the production plan generating unit outputs the changed production plan confirmed in step S1180. Here, the production plan generating unit may store the confirmed changed production plan in the aforementioned production plan database (e.g., the production plan database 371 illustrated in FIG. 4) or may display the confirmed changed production plan to the administrator of the factory, the operators, or the like via the display unit of the management terminal (e.g., the management terminal 216 illustrated in FIG. 2).

According to the production plan generating process 1100 described above, a changed production plan to respond to a sudden plan change can be generated in real time in consideration of the structural constraints of the factory, the failure probability, and the cost criterion.

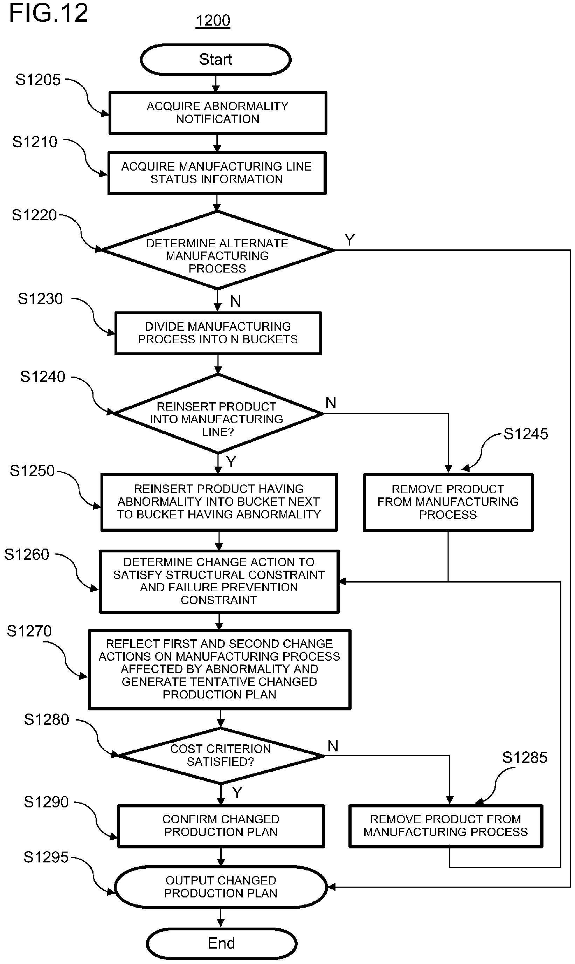

Next, with reference to FIG. 12, the flow of a production plan change process according to the embodiments of the present disclosure will be described.

FIG. 12 is a view illustrating an example of the flow of a production plan change process 1200 according to the embodiments of the present disclosure. The production plan change process 1200 illustrated in FIG. 12 is a process of changing, in real time, in a case where an abnormality occurs in the factory, an existing production plan formed in advance (hereinafter referred to as an "existing production plan") to respond to the abnormality and generating a changed production plan, and is executed by the aforementioned production plan generating unit (e.g., the production plan generating unit 368 illustrated in FIG. 3).

The production plan change process 1200 illustrated in FIG. 12 differs from the production plan change process 1100 for generating a production plan in response to a request from external to the factory in that a production plan to respond to an abnormality that has occurred internally within the factory is generated.

First, in step S1205, the production plan generating unit acquires an abnormality notification. The abnormality notification is a notification indicating that an abnormality has occurred in the factory and may include the time and the location at which the abnormality has occurred, the contents of the abnormality (e.g., the manufacturing process, the manufacturing line, or the product affected), or the like.

Note that the abnormality here may include a failure of a machine, an accident, a working error by an operator, and the like and may be detected by a camera, a sensor, or the like provided in the factory.

Subsequently, in step S1210, the production plan generating unit acquires manufacturing line status information. The manufacturing line status information is information that indicates the current status of each manufacturing line in the factory and includes the position or the state of each product in a manufacturing line, for example. In one embodiment, the production plan generating unit may acquire the manufacturing line status information by acquiring information from QR codes or RFID tags attached to each product by use of a sensor device connected to the network in the factory and aggregating this information. Further, in one embodiment, the production plan generating unit may acquire manufacturing line status information by analyzing, using existing object detecting means, a video image from a camera configured to taking video images of a manufacturing line. In this way, the products or the manufacturing processes that are affected by the abnormality can be identified.

Subsequently, in step S1220, the production plan generating unit determines whether or not there is an alternate manufacturing process for the manufacturing process affected by the abnormality. Here, the production plan generating unit refers to the aforementioned alternate manufacturing process database (e.g., the alternate manufacturing process database 373 illustrated in FIG. 4), and with regard to the product identified as affected by the abnormality in step S1205 or step S1210, the production plan generating unit checks whether or not an alternate manufacturing process to manufacture the product has been stored in advance.

With regard to the product identified as affected by the abnormality, in the case that an alternate manufacturing process for manufacturing the product has been stored in the alternate manufacturing process database in advance, the process proceeds to step S1295 to generate a changed production plan based on the alternate manufacturing process and output the changed production plan. Here, the production plan generating unit may delete the affected manufacturing process from the production plan and generate a changed production plan by adding the alternate manufacturing process for the manufacturing process instead, for example.

Conversely, in the case that an alternate manufacturing process for manufacturing the product has not been stored in the alternate manufacturing process database in advance, the process proceeds to step S1230.

Subsequently, in step S1230, the production plan generating unit divides the existing production plan into N buckets. Here, the number of buckets N may be set by the administrator of the factory or the like or may be set, for example, the number of products to be subjected to the specific manufacturing process (e.g., five products may be placed in one bucket), the type of product (e.g., products of the same type are placed in one bucket), the shift-change time of operators in the factory (products to be processed before a shift-change may be placed in one bucket), or the like.

As will be described later, by dividing the existing production plan into a predetermined number of buckets, manufacturing processes to respond to abnormalities can be easily reconfigured.

Subsequently, in step S1240, the production plan generating unit determines whether or not the product identified as affected by the abnormality is reinserted into a manufacturing line. Here, the production plan generating unit may determine whether or not the product is reinserted into the manufacturing line based on the state of the product or an input from the administrator of the factory.

As an example, in a case where the product is damaged as a result of the abnormality, the production plan generating unit may determine that the product cannot be reinserted into the manufacturing line.

Conversely, in one embodiment, the product specified as affected by the abnormality may be inspected, and in the case that the product is determined not to be damaged, the production plan generating unit may determine that the product can be reinserted into the manufacturing line.

In the case that the product identified as affected by the abnormality is determined to be reinserted into the manufacturing line, the process proceeds to step S1250, and in the case that it is determined that the product identified as affected by the abnormality cannot be reinserted into the manufacturing line, the process proceeds to step S1245.

In the case that it is determined that the product identified as affected by the abnormality cannot be reinserted into the manufacturing line, the production plan generating unit removes the product from the manufacturing process in step S1245.

Herein, the production plan generating unit may transmit an instruction to remove the product identified as affected by the abnormality from the manufacturing line to the administrator of the factory or a machine such as a robot. After that, the process proceeds to step S1260.

Subsequently, in step S1250, the production plan generating unit inserts the product identified as affected by the abnormality into a bucket next to the bucket for which the abnormality occurred in the manufacturing order specified by the existing production plan.

It should be noted that, at this time, the product to be inserted into the bucket may be inserted into an arbitrary slot of the bucket, and the adjustment of the slots may be performed by executing a change action to satisfy the structural constraints, the cost criterion, and the failure prevention constraint, as will be described later.

Subsequently, in step S1260, the production plan generating unit determines a change action to change the existing production plan to satisfy the aforementioned structural constraints and the aforementioned failure prevention constraint.

Step S1150 is a step corresponding to a combination of step S1030 and step S1040 in the aforementioned short-term production plan generating process 1000, and therefore, a redundant description thereof will be omitted here for convenience of description.

In step S1270, the production plan generating unit reflects the change action determined in step S1260 on the manufacturing process affected by the abnormality in the existing production plan and generates a tentative changed production plan.

Here, the production plan generating unit may generate a tentative short-term production plan by changing the order of buckets and slots expressing the manufacturing process of the existing production plan based on the change action.

As an example, in a case where the first change action and the second change action specify changing a manufacturing order of " product 1, product 2, product 3, product 4" to a manufacturing order of "product 3, product 2, product 4, product 1," the production plan generating unit may generate a tentative short-period production plan such that a bucket with the manufacturing order of "product 1, product 2, product 3, product 4" is changed to a bucket with "product 3, product 2, product 4, product 1" by placing product 1 in the fourth slot, placing product 3 in the first slot, and placing product 4 in the third slot.

By changing the manufacturing order of the existing production plan to satisfy the structural constraints and the failure prevention constraint, a tentative changed production plan that suppresses the probability of failure occurrence can be acquired. Note that, since the determination of whether the cost criterion is satisfied has not been performed, the tentative changed production plan is not a confirmed production plan but is tentative.

In step S1280, the production plan generating unit determines whether or not the tentative changed production plan generated in step S1270 satisfies the cost criterion included in the cost criterion information (e.g., the cost criterion information 610 illustrated in FIG. 6). The cost criterion information here is cost criterion information including additional costs caused by responding to an abnormality such as a failure (additional overhead costs arising due to the failure, additional charges for urgent delivery, or the like), and may be set by the administrator of the factory or the like as described above.

Herein, the production plan generating unit determines whether or not costs (labor costs, maintenance costs, inventory carrying costs, backlog costs, and overhead costs) of the tentative changed production plan generated in step S1270 satisfy the cost criterion specified by the cost criterion information. For example, the production plan generating unit may determine whether or not the costs of the tentative changed production plan generated in step S1270 fall within a budget specified by the cost criterion information or may determine whether or not each of the labor cost, the maintenance cost, the inventory carrying cost, the backlog cost, the overhead cost, or the like satisfy a weight or a priority specified by the cost criterion information.

In the case that the tentative changed production plan satisfies the cost criterion, the process proceeds to step S1290, and in the case that the tentative changed production plan does not satisfy the cost criterion, the process proceeds to step S1285.

In the case that the tentative changed production plan does not satisfy the cost criterion, the production plan generating unit determines, in step S1285, that the product identified as affected by the abnormality cannot be reinserted into the manufacturing line, and the production plan generating unit removes the product from the manufacturing process.

Here, the production plan generating unit may transmit an instruction to remove the product identified as affected by the abnormality from the manufacturing line to the administrator of the factory or a machine such as a robot. After that, the process returns to step S1260.

Subsequently, in step S1290, the production plan generating unit confirms the changed production plan determined to satisfy the cost criterion in step S1280. More specifically, the flow of the manufacturing processes specified in the changed production plan, the type of the products to be manufactured in each manufacturing process, the quantity of the product, the manufacturing order, the line-out date of the product, and the like are determined.

Subsequently, in step S1295, the production plan generating unit outputs the changed production plan confirmed in step S1290. Here, the production plan generating unit may store the confirmed changed production plan in the aforementioned production plan database (e.g., the production plan database 371 illustrated in FIG. 4) or may display the confirmed changed production plan to the administrator of the factory, the operators, or the like via the display unit of the management terminal (e.g., the management terminal 216 illustrated in FIG. 2).

According to the production plan generating process 1200 described above, a changed production plan for responding to an abnormality such as a failure can be generated in real time in consideration of the structural constraints of the factory, the failure probability, and the cost criterion.

Note that the production plan change process 1200 has been described with reference to an example in which a changed production plan is generated in real time based on alternate manufacturing processes stored in the alternate manufacturing process database, but this disclosure is not limited to this, and a process of generating a changed production plan in real time based on alternate manufacturing processes stored in the alternate manufacturing process database may be also included in the production plan change process 1100 illustrated in FIG. 11, for example.

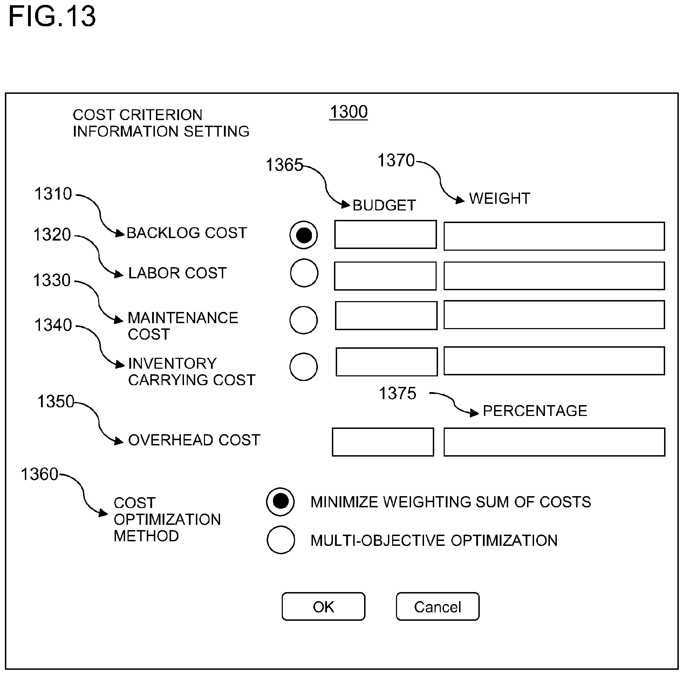

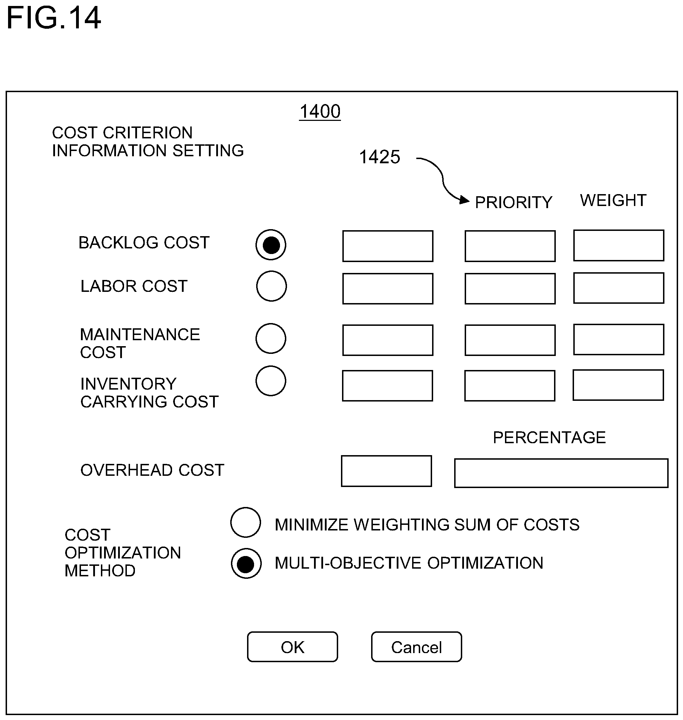

Next, with reference to FIGS. 13, 14, a cost criterion information setting interface for setting cost criterion information according to the embodiments of the present disclosure will be described.

FIG. 13 is a view illustrating an example of a cost criterion information setting interface 1300 to set cost criterion information according to the embodiments of the present disclosure. The cost criterion information setting interface 1300 illustrated in FIG. 13 is a GUI for setting the aforementioned cost criterion information (e.g., the cost criterion information 610 illustrated in FIG. 6) and may be displayed on the display unit of the aforementioned management terminal (e.g., the management terminal 216 illustrated in FIG. 2) or the like. Thus, a user such as the administrator or the operator in the factory can set the cost criterion information via the cost criterion information setting interface 1300.

As illustrated in FIG. 13, in the cost criterion information setting interface 1300, the user such as the administrator or the operator in the factory can set a budget 1365 and a weight 1370 for each of a backlog cost 1310, a labor cost 1320, a maintenance cost 1330, an inventory carrying cost 1340, and an overhead cost 1350 included in the cost criterion information.

The budget 1365 is the total amount of the respective budgets for the backlog cost 1310, the labor cost 1320, the maintenance cost 1330, the inventory carrying cost 1340, and the overhead cost 1350. The weight 1370 is a parameter to specify the importance of each of the backlog cost 1310, the labor cost 1320, the maintenance cost 1330, the inventory carrying cost 1340, and the overhead cost 1350, and the higher the weight of a given cost, the more important it is to suppress the given cost.

Further, in the cost criterion information setting interface 1300, the user can input, in a percentage 1375, what percentage of the whole costs the user wants to set the overhead cost to. Further, in a cost optimization method 1360, the user can select a method to optimize costs. For example, the user may select "MINIMIZE WEIGHTING SUM OF COSTS" or "MULTI-OBJECTIVE OPTIMIZATION" as the method to optimize costs.

Finally, the user may confirm the input cost criterion information by pressing the "OK" button or may cancel the setting of the cost criterion information by pressing the "Cancel" button.

FIG. 14 is a view illustrating an example of a cost criterion information setting interface 1400 for setting cost criterion information according to the embodiments of the present disclosure. The cost criterion information setting interface 1400 illustrated in FIG. 14 is substantially similar to the cost criterion information setting interface 1300 described with reference to FIG. 13 but is different therefrom in that a priority 1425 for each cost can be set in addition to the weight.

The priority 1425 for each cost is a parameter to specify the priority of each of the backlog cost, the labor cost, the maintenance cost, the inventory carrying cost, and the overhead cost. A cost with a higher priority 1425 is optimized in a preferential manner regardless of the weight of each cost. In a case where a plurality of costs has the same priority, these costs are optimized together.

According to the cost criterion information setting interfaces 1300, 1400 described above, the cost criterion information can be input. As described above, the cost criterion information input via the cost criterion information setting interfaces 1300, 1400 is used, for example, in step S940 in the long-term production plan generating process 900, in step S1060 in the short-term production plan generating process 1000, in step S1170 in the production plan change process 1100, and in step S1280 in the production plan change process 1200.

According to the production plan management technique according to the embodiments of the present disclosure, it is possible to provide a production plan management technique for generating, in real time, a production plan that can respond to a sudden plan change in consideration of costs arising due to the production plan or a failure probability in a manufacturing process.

More specifically, the production plan generating unit according to the embodiment of this disclosure generates a production plan based on cost criterion information specifying a budget for the production plan and a failure prevention constraint to suppress failure occurrence, and as a result, it is possible to generate a production plan with lowered costs while avoiding failures.

Further, in the case where an abnormality occurs in a specific manufacturing process, the production plan generating unit according to the embodiments of the present disclosure determines in advance an alternate manufacturing process to be executed instead of a manufacture step and stores the alternate manufacturing step in the alternate manufacturing process database. Thus, when an abnormality actually occurs in the manufacturing process, a production plan is generated based on the alternate manufacturing process stored in the alternate manufacturing process database, so that a production plan that responds to the abnormality can be generated in real time.

The embodiments of the present invention has been described above, but the present invention is not limited to the above embodiments, and various modifications can be made without departing from the spirit of the present disclosure.

### Description of Reference Numerals

200 production plan management system, 202 customer terminal, 204 distribution terminal, 206 delivery terminal, 208 communication network, 210 factory, 215 production plan management device, 216 management terminal.

## Claims

1. A production plan management device for generating a production plan of a product in real time, the production plan management device comprising:
a communication unit configured to acquire product order information including a customer request specifying an item, quantity, and a delivery date of a first product and cost criterion information specifying a cost criterion for costs required to manufacture the first product;
a storage unit configured to store a structural constraint database including structural constraint information specifying a structural constraint defining a condition for manufacturing processes to manufacture the first product; and
a production plan generating unit configured to generate, in real time, a production plan that satisfies the customer request, the cost criterion, and the structural constraint and defines manufacturing processes to manufacture the first product.

2. The production plan management device according to claim 1, wherein:
the storage unit further stores
a failure expectation database including, for each of the manufacturing processes, information regarding failure probability of a failure occurring and a failure prevention constraint specifying a condition to avoid the failure, and
an alternate manufacturing process database including, for each of the manufacturing processes, alternate manufacturing process information specifying an alternate manufacturing process; and
the production plan generating unit generates, in real time, a production plan that satisfies the failure prevention constraint in addition to the customer request, the cost criterion, and the structural constraint and defines the manufacturing processes for manufacturing the first product.

3. The production plan management device according to claim 2, wherein:
the production plan generating unit determines a probability of a failure occurring in each of the manufacturing processes included in the production plan by using the information regarding failure probability;
in a case where the probability of a failure occurring with respect to a first manufacturing process included in the production plan exceeds a predetermined failure probability criterion, the production plan generating unit determines a first alternate manufacturing process to be executed instead of the first manufacturing process in the production plan and stores the first alternate manufacturing step in the alternate manufacturing process database; and
in a case that a failure occurs in the first manufacturing process, the production plan generating unit changes the first manufacturing process to the first alternate manufacturing process in the production plan.

4. The production plan management device according to claim 1, wherein:
in a case that the communication unit receives a production plan change request requesting a change to the production plan, the production plan generating unit acquires manufacturing line status information indicating a current status of a manufacturing line affected by the production plan change request;
in a case that the production plan is changed by use of the manufacturing line status information as requested by the production plan change request, the production plan generating unit determines whether or not the production plan satisfies the cost criterion and the structural constraint; and
in a case where the production plan is changed, when the production plan generating unit determines that the production plan satisfies the cost criterion and the structural constraint, the production plan generating unit changes the production plan in accordance with the change of the production plan.

5. The production plan management device according to claim 1, wherein:
the cost criterion information includes
information on a labor cost, a maintenance cost, an inventory carrying cost, a backlog cost, and an overhead cost, and
a weight that indicates importance of each of the labor cost, the maintenance cost, the inventory carrying cost, the backlog cost, and the overhead cost.

6. A production plan management method for generating, in real time, a production plan of a product, the production plan management method comprising:
a step of acquiring product order information including a customer request specifying an item, quantity, and a delivery date of a first product;
a step of acquiring cost criterion information specifying a cost criterion for costs required to manufacture the first product;
a step of acquiring structural constraint information specifying a structural constraint defining a condition for manufacturing processes to manufacture the first product;
a step of generating, in real time, a production plan that satisfies the customer request, the cost criterion, and the structural constraint and defines manufacturing processes for manufacturing the first product;
a step of acquiring information regarding failure probability of a failure occurring for each of the manufacturing processes and determining a probability of a failure occurring in each of the manufacturing processes included in the production plan by using the information regarding failure probability;
a step of determining, in a case that the probability of a failure occurring with respect to a first manufacturing process included in the production plan exceeds a predetermined failure probability criterion, a first alternate manufacturing process to be executed instead of the first manufacturing process in the production plan; and
a step of changing, in a case that a failure occurs in the first manufacturing process, the first manufacturing process to the first alternate manufacturing process in the production plan.

7. A production plan management system for generating, in real time, a production plan of a product, the production plan management system comprising:
a customer terminal used by a customer requesting a first product;
a distribution terminal configured to manage information regarding distribution of the first product;
a delivery terminal configured to manage information regarding delivery of the first product;
a management terminal used by an administrator of the factory; and
a production plan management device configured to generate a production plan, wherein:
the customer terminal, the distribution terminal, the delivery terminal, the management terminal, and the production plan management device are connected to each other via a communication network; and
the production plan management device includes
a communication unit configured to
receive, from the customer terminal, product order information including a customer request specifying an item, quantity, and a delivery date of the first product,
receive, from the management terminal, cost criterion information specifying a cost criterion for costs required to manufacture the first product, and
receive, from the distribution terminal and/or the delivery terminal, distribution and delivery status information that indicates a respective status of distribution and delivery,
a storage unit configured to store a structural constraint database including structural constraint information specifying a structural constraint defining a condition for manufacturing processes to manufacture the first product in the factory, and
a production plan generating unit configured to generate, in real time, a production plan that satisfies the customer request, the cost criterion, and the structural constraint and defines manufacturing processes for manufacturing the first product, calculate an estimated delivery date on which the first product is deliverable to the customer based on the production plan thus generated and a lead calculated from the delivery status information, and transmit the estimated delivery date to the customer terminal.
